# EUROPEAN PATENT APPLICATION

(11) **EP 4 811 236 A1**
(43) Date of publication of application: **23.09.2026**
(21) Application number: 26163704.5
(22) Date of filing: 10.03.2026
(51) Int. Cl.: G06Q 10/0631, G06Q 10/08, G06Q 50/40, G06Q 30/018

(54) **METHOD, APPARATUS, AND PROGRAM FOR MANAGING GREENHOUSE GASES**

(30) Priority: 18.03.2025 JP 2025043132
(71) Applicant: RISO KAGAKU CORPORATION, Tokyo 108-8385 (JP)
(72) Inventor: HAYASHI, Yamato, Tokyo 108-8385 (JP); ARIMURA, Eijiro, Tokyo 108-8385 (JP)
(74) Representative: Winter, Brandl - Partnerschaft mbB

(57) **Abstract**

[Objective]

To provide a method, an apparatus, and a program for managing greenhouse gases that enables corporations and others to manage an amount of greenhouse gas emissions to achieve target amounts of emissions and perform deliveries under conditions that bring emissions closer to the target.

[Constitution]

An apparatus includes: a package information acquiring unit (13) that acquires information regarding a package to be delivered; a delivery condition selecting unit (14) that selects delivery conditions for the package based on the acquired package information, such that an amount of greenhouse gas emissions associated with the delivery are less than or equal to a predetermined target amount of emissions; and a management unit (15) that manages greenhouse gas emissions according to the delivery conditions selected by the delivery condition selecting unit (14).

## Description

### Technical Field

The present invention relates to an apparatus, a method, and a program for managing greenhouse gases which are generated by the delivery of packages.

### Background Art

In recent years, various industries have undertaken initiatives to reduce greenhouse gases, including CO₂. In this context, a mechanism called "carbon offset" has been created. This mechanism allows the portion of greenhouse gas emissions from daily activities that cannot be reduced to be offset by reductions achieved elsewhere. The "Offset Credit (J-VER) System" was established to certify quantities of emission reductions and absorption, and the J-Credit System has been launched.

As a system related to greenhouse gas reduction efforts, Patent Document 1 proposes a management system that contributes to reducing CO₂ emissions from freight transport. This system provides services for consuming CO₂ emission reductions within companies and society, as well as trading them with third parties.

In addition, Patent Document 2 proposes a printing system that aims to reduce greenhouse gas emissions by confirming the installation of carbon offset consumables and then changing the printing settings of a printing apparatus to ecological settings.

### [Background Art Documents]

### [Patent Documents]

[Patent Document 1]
   Japanese Unexamined Patent Publication No. 2010-287200
[Patent Document 2]
   Japanese Unexamined Patent Publication No. 2011-164874

### Summary

### [Technical Problem]

Patent Document 1 proposes managing CO₂ emissions from transportation means in freight logistics, and Patent Document 2 proposes reducing greenhouse gas emissions by changing printing settings. However, neither proposes a method for managing greenhouse gas target amount of emissions that companies wish to achieve across an entire supply chain.

The present invention has been developed in view of the foregoing circumstances. The object of the present invention is to provide a greenhouse gas managing apparatus, a greenhouse gas management method, and a greenhouse gas management program which is capable of managing greenhouse gas emissions to achieve a target amount of greenhouse gas emissions and enable delivery under conditions that bring emissions closer to the target amount.

### [Solution to the Problem]

The greenhouse gas managing apparatus of the present invention is equipped with: a package information acquiring unit for acquiring information regarding a package to be delivered; a delivery condition selecting unit for selecting delivery conditions for the package to be delivered based on the package information acquired by the package information acquiring unit, such that the amount of greenhouse gas emissions associated with delivery of the package to be delivered are less than or equal to a predetermined target amount of emissions; and a management unit for managing the amount of greenhouse gas emissions corresponding to the delivery conditions selected by the delivery condition selecting unit.

### [Effect of the Invention]

According to the greenhouse gas managing apparatus of the present invention, information regarding the package to be delivered is acquired. Delivery conditions for the package are selected based on this package information such that greenhouse gas emissions associated with the delivery of the package are less than or equal to a predetermined target amount of emissions. Greenhouse gas emissions corresponding to the selected delivery conditions are then managed. This enables management of greenhouse gas emissions to achieve the target amount of emissions, enabling delivery to be performed under conditions that bring emissions closer to the target amount.

### Brief Description of the Drawings

Figure 1 is a block diagram that illustrates the schematic configuration of an eco-friendly delivery system that employs an embodiment of the greenhouse gas managing apparatus of the present invention.
Figure 2 is a flowchart for explaining the method for selecting delivery conditions and managing the greenhouse gas emissions of a shipper in the greenhouse gas managing apparatus illustrated in Figure 1.
Figure 3 is a diagram that illustrates an example of a greenhouse gas emissions calculation table.
Figure 4 is a diagram that illustrates an example of a carbon credit utilization information table.
Figure 5 is a diagram that illustrates an example of printing conditions in a printing apparatus.

### Embodiments of the Invention

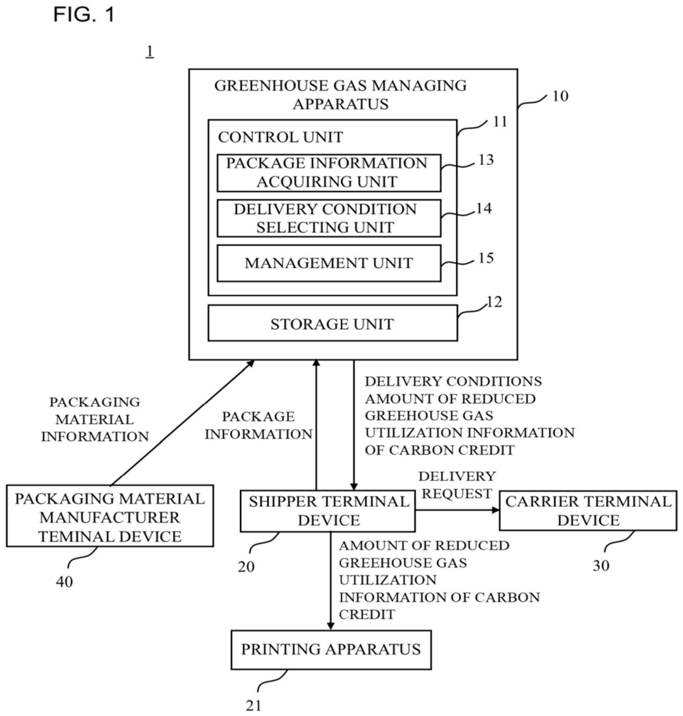

An eco-friendly delivery system 1 that employs an embodiment of the greenhouse gas managing apparatus of the present invention will be described in detail below, with reference to the attached drawings. Figure 1 is a block diagram that illustrates the schematic configuration of the eco-friendly delivery system 1 of the present embodiment.

As illustrated in Figure 1, the eco-friendly delivery system 1 of the present embodiment is equipped with a greenhouse gas managing apparatus 10, a shipper terminal device 20, a carrier terminal device 30, and a packaging material manufacturer terminal device 40.

The shipper terminal device 20, the carrier terminal device 30, the packaging material manufacturer terminal device 40, and the greenhouse gas managing apparatus 10 are connected via communication lines such as Internet lines. This configuration enables the exchange of various information via the communication lines.

The eco-friendly delivery system 1 of the present embodiment is a system that determines eco-friendly delivery methods based on information regarding packages to be delivered, and manages greenhouse gas emissions such that the greenhouse gas emissions associated with the delivery of the packages are less than or equal to a target amount of emissions.

Each of the components of the eco-friendly delivery system 1 of the present embodiment will be described in greater detail.

As illustrated in Figure 1, the greenhouse gas managing apparatus 10 is equipped with a control unit 11 and a storage unit 12. The control unit 11 controls the entirety of the greenhouse gas managing apparatus 10. Specifically, the control unit 11 of the present embodiment comprises a package information acquiring unit 13, a delivery condition selecting unit 14, and a management unit 15.

The package information acquiring unit 13 acquires information regarding a package to be delivered (hereinafter referred to as package information). The package information is output from the shipper terminal device 20, which received the package order information, to the greenhouse gas managing apparatus 10. The package information includes details such as the package size, weight, delivery destination, delivery method (e.g., standard, refrigerated, frozen), and delivery date.

The package information acquiring unit 13 outputs information necessary for determining the packaging material of the package, such as size, weight, and delivery method, from among details of the package information to the packaging material manufacturer terminal device 40.

The delivery condition selecting unit 14 selects delivery conditions based on the package information acquired by the package information acquiring unit 13. Specifically, the delivery condition selecting unit 14 selects delivery conditions for each package such that the amount of greenhouse gas emissions associated with delivery of the package from the shipper are less than or equal to a target amount of emissions which is preset by the shipper. The method for selecting delivery conditions will be described in detail later.

The management unit 15 manages greenhouse gas emissions associated with the package shipped by the shipper. Specifically, the management unit 15 acquires the greenhouse gas emissions associated with package transportation, including emissions from manufacturing packaging materials for the package, emissions from delivering the package under specified delivery conditions, and emissions from printing processes on the packaging materials. The management unit 15 then cumulatively adds and manages these emissions. Each of the aforementioned emissions will be described in detail later.

In addition, the management unit 15 manages information regarding the use of carbon credits during the delivery of the package shipped by the shipper. Information regarding carbon credits from companies and other entities is registered in advance in the greenhouse gas managing apparatus 10. The carbon credit information which is registered in the management unit 15 is utilized in the case that the delivery conditions for the package shipped by the shipper exceed the shipper's greenhouse gas target amount of emissions. The use and management of carbon credits will be described in detail later.

The storage unit 12 stores greenhouse gas emissions and other data managed by the management unit 15.

The greenhouse gas managing apparatus 10 includes a CPU (Central Processing Unit), semiconductor memory such as a ROM (Read Only Memory) and a RAM (Random Access Memory), storage such as a hard disk, and a communication I/F (Interface).

An embodiment of the greenhouse gas management program of the present invention is installed in the storage of the greenhouse gas managing apparatus 10. The functions of the control unit 11 and memory unit 12 of the greenhouse gas managing apparatus 10 are realized by the CPU launching the greenhouse gas management program.

In addition, in the present embodiment, the control unit 11 and storage unit 12 perform their functions by executing a greenhouse gas management program via the CPU. However, some or all of the functions executed by the greenhouse gas management program may be implemented using hardware such as an ASIC (Application Specific Integrated Circuit), an FPGA (Field-Programmable Gate Array), or other electrical circuits.

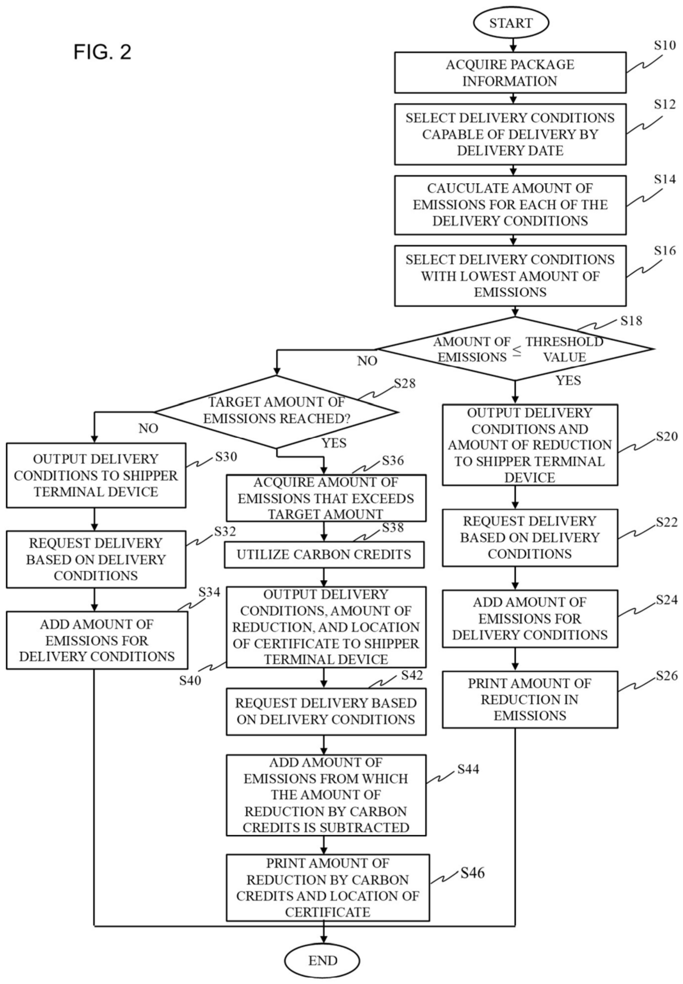

Next, the method for selecting delivery conditions and the method for managing the greenhouse gas emissions of shippers in the greenhouse gas managing apparatus 10 will be described, with reference to the flowchart illustrated in Figure 2.

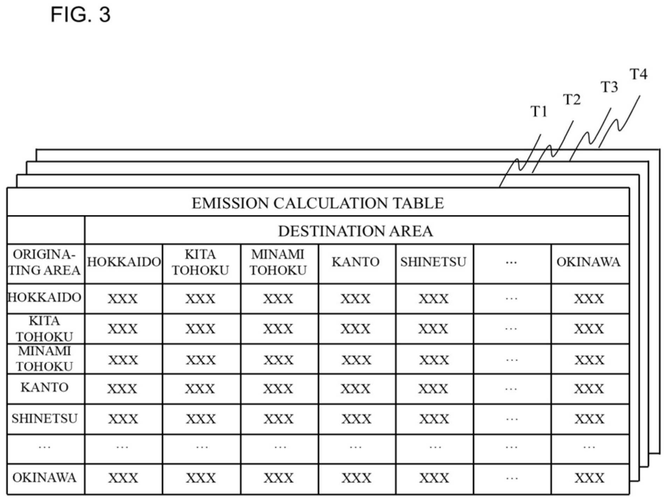

First, the package information acquiring unit 13 acquires package information (S10). Then, the delivery condition selecting unit 14 selects delivery conditions based on the package information. Specifically, the delivery condition selecting unit 14 has preset greenhouse gas emission calculation tables, such as that illustrated in Figure 3. The emission calculation tables illustrated in Figure 3 set greenhouse gas emissions for each combination of an originating area and a destination area of the package. Each of the emission calculation tables T1, T2, T3, and T4 is an emission calculation tables that correspond to the weights of packages.

The delivery condition selecting unit 14 has the emission calculation tables T1 to T4 illustrated in Figure 3 set for each delivery condition. Examples of delivery conditions include gasoline vehicle, EV (Electric Vehicle, rail, ship, and drone.

The delivery condition selecting unit 14 first selects delivery conditions capable of delivering by a delivery date based on the delivery date in the package information (S12). Then, the delivery condition selecting unit 14 refers to the emission calculation table for each delivery condition selected in S12 and calculates the greenhouse gas emissions for each delivery condition based on the weight of the package, originating area, and destination area (S14).

Next, the delivery condition selecting unit 14 selects the delivery condition with the lowest greenhouse gas emissions calculated in S14 from among the delivery conditions selected in S12 (S16).

Then, the delivery condition selecting unit 14 confirms whether the emissions of the delivery condition selected in S16 are less than or equal to a preset threshold value (S18). The threshold value is a value set for each package to achieve the shipper's preset greenhouse gas target amount of emissions (e.g., annual target amount of emissions). This threshold value may be fixed or may be appropriately adjusted based on the cumulative sum of the shipper's greenhouse gas emissions.

Next, if the emissions of the delivery condition selected in S16 are below the threshold value (S18, YES), the delivery condition selecting unit 14 outputs that delivery condition as an eco-friendly delivery condition to the shipper terminal device 20. The delivery condition selecting unit 14 also calculates the amount of emissions reduced by selecting that eco-friendly delivery condition and outputs this amount to the shipper terminal device 20 (S20). The reduced amount of emissions may be calculated by subtracting an amount of emissions that corresponds to the delivery condition selected in S16 from a standard amount of greenhouse gas emissions which is set in advance and is derived from the weight, the originating area, and the destination area of the package, for example.

The shipper terminal device 20 receives the delivery conditions output from the greenhouse gas managing apparatus 10, and the shipper sends a delivery request to the carrier terminal device 30 to have the package delivered under these conditions (S22).

In addition, the delivery condition selecting unit 14 outputs the amount of emissions of the delivery conditions selected in S16 to the management unit 15. The management unit 15 adds the input amount of emissions to the current cumulative greenhouse gas emissions value of the shipper (S24).

Further, the shipper terminal device 20 receives the amount of reduced emissions which is output from the greenhouse gas managing apparatus 10, outputs the amount to the printing apparatus 21, and causes the amount to be printed on the packaging material of the package (S26). The printing conditions at this time will be described in detail later.

Meanwhile, in the case that the amount of emissions from the delivery condition selected in S16 exceeds a preset threshold value (S18, NO), the delivery condition selecting unit 14 confirms whether adding the emissions from the delivery condition selected in S16 to the current cumulative sum of the greenhouse gas emissions of the shipper managed by the management unit 15 will exceed the target amount of emissions of the shipper (S28). The target amount of emissions which is referenced at this time may be an annual target amount of emissions or a target amount of emissions quantity for a shorter period of time, such as a monthly target amount of emissions.

Next, in the case that the shipper's target amount of emissions will not be reached (S28, NO), the delivery condition selecting unit 14 outputs the delivery conditions selected in S16 as normal delivery conditions to the shipper terminal device 20 (S30).

The shipper terminal device 20 receives the delivery conditions output from the greenhouse gas managing apparatus 10, and the shipper sends a delivery request to the carrier terminal device 30 to have the package delivered under these conditions (S32).

In addition, the delivery condition selecting unit 14 outputs the emission amount of the delivery condition selected in S16 to the management unit 15. The management unit 15 adds the input amount of emissions to the shipper's current cumulative greenhouse gas emissions value (S34).

Meanwhile, in the case that it is confirmed that the target amount of emissions of the shipper will be reached in step S28 (S28, YES), the delivery condition selecting unit 14 calculates the amount of excess emissions (S36) and utilizes carbon credits which are managed by the management unit 15 (S38).

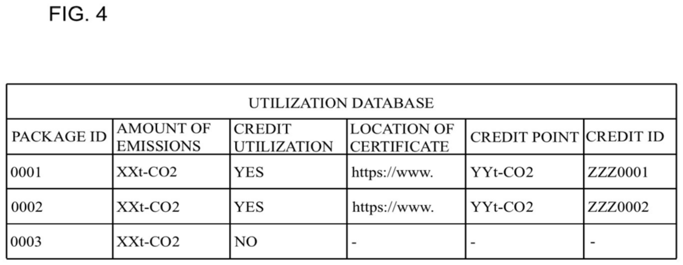

As described above, carbon credit information is managed by the management unit 15. Figure 4 is a diagram that illustrates an example of a carbon credit utilization information table which is managed by the management unit 15. In the utilization information table illustrated in Figure 4, the following items are stored, correlated to each other: a package ID (shipping identification information), the amount of greenhouse gases that will be emitted associated with delivery of the package, whether carbon credits were utilized, the location of a certificate for the utilization of carbon credits, the number of credit points that were utilized, and a carbon credit ID (identification information for the utilized carbon credits). In the case that carbon credits are used in S38 as described above, the utilization information table illustrated in Figure 4 is updated.

In addition, when utilizing carbon credits, the credit points from which credit ID is to be utilized may be selected randomly by the management unit 15, for example. Alternatively, the management unit 15 may select credit points related to the shipper or credit points related to the delivery route of the package. Credit points related to the shipper include credit points generated by greenhouse gas reductions in the same region as the shipper's location, for example. Credit points related to the delivery route of the package include credit points generated by greenhouse gas reductions in the region where the package is delivered, or credit points generated by greenhouse gas reductions under different delivery conditions on the same delivery route, for example.

Next, the delivery condition selecting unit 14 outputs the delivery condition selected in S16 to the shipper terminal device 20 as an eco-friendly delivery condition that utilizes carbon credits. The delivery condition selecting unit 14 also outputs information regarding the amount of greenhouse gas reduction achieved by the carbon credits and the location of a carbon credit certificate to the shipper terminal device 20 (S40).

The shipper terminal device 20 receives the delivery conditions output from the greenhouse gas managing apparatus 10. The shipper then sends a delivery request to the carrier terminal device 30 to have the package delivered under these conditions (S42).

In addition, the delivery condition selecting unit 14 outputs the amount of emissions, calculated by subtracting a number of carbon credits that corresponds to an amount of reduction from the amount of emissions of the delivery condition selected in S16, to the management unit 15. The management unit 15 adds the input amount of emissions to the current cumulative greenhouse gas emissions value of the shipper (S44).

Further, the shipper terminal device 20 receives the amount of reduction from carbon credits and the location information of the carbon credit certificate, which are output from the greenhouse gas managing apparatus 10, outputs the amount and the location to the printing apparatus 21, and causes it to be printed on the package material (S46). At this time, the name of the carbon credit owner and a movement that the owner is involved in may also be printed.

Note that in the steps of the process illustrated in the above flowchart, delivery conditions, which are capable of delivery by the delivery date specified in the package information, and which have emissions below the threshold value, are always adopted as eco-friendly delivery conditions. However, the present invention is not limited to such a configuration. Within a range in which the cumulative sum of greenhouse gas emissions does not exceed the target amount of emissions, eco-friendly delivery conditions and other delivery conditions may be adopted at a fixed ratio. Other delivery conditions may include, for example, delivery conditions which are capable of delivery by the delivery date specified in the package information and are less costly than eco-friendly delivery conditions.

In addition, as the cumulative sum of greenhouse gas emissions approach the target amount of emissions, the above ratio may be adjusted. For example, the ratio of eco-friendly delivery conditions to other delivery conditions could initially be set at a ratio of 7:3, and as the cumulative greenhouse gas emissions approach the target amount of emissions, the ratio could be adjusted to 8:2. As the cumulative emissions approach the target amount of emissions, the ratio of adopted eco-friendly delivery conditions may be increased.

Next, the shipper terminal device 20 will be described.

The shipper terminal device 20 is a terminal device which is utilized by the shipper to receive order information from an ordering party and manage the preparation, the packaging, and the communication of a request to the carrier for a product. The shipper terminal device 20 may be a desktop computer or a notebook computer, for example. However, the present invention is not limited to such a configuration. Mobile terminals such as tablet devices and smartphones may be utilized as the shipper terminal device 20.

The shipper terminal device 20 receives order information, for example, from an EC (Electronic Commerce) site, extracts the package information described above from the order information, and outputs it to the greenhouse gas managing apparatus 10.

In addition, the shipper terminal device 20 receives delivery conditions output from the greenhouse gas managing apparatus 10. The shipper selects a carrier based on the delivery conditions received by the shipper terminal device 20 and sends a delivery request to the terminal device 30 of the selected carrier.

Further, a printing apparatus 21 is connected to the shipper terminal device 20. The printing apparatus 21 prints codes containing information such as the product package and production information, as well as alerts for workers that handle the package ("Fragile", for example), onto the surface of the packaging material for the package.

The printing apparatus 21 also prints the amount of greenhouse gas reduction achieved by the selected delivery conditions received by the shipper terminal device 20, the amount of greenhouse gas reduction achieved through carbon credits, and the location of the carbon credit certificate on the surface of the packaging material.

In addition, the shipper terminal device 20 calculates the amount of greenhouse gases which will be emitted during the printing process performed by the printing apparatus 21, and outputs the calculated amount to the greenhouse gas managing apparatus 10. The emissions which will be generated during the printing process are calculated using a preset table or a similar method based on the electricity consumption used for the printing process and the ink consumption (including ink consumed during printing and ink consumed during maintenance operations).

Note that the amount of greenhouse gas emissions may be reduced by changing the printing conditions for the printing process by the printing apparatus 21.

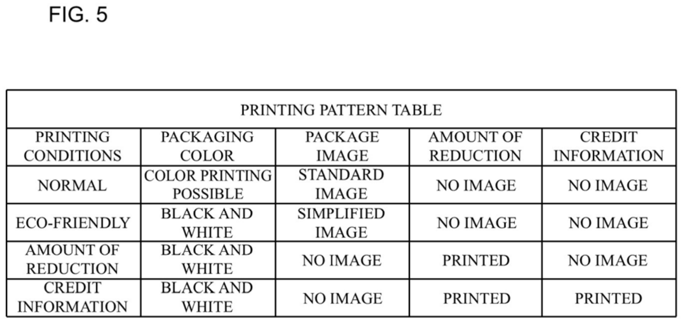

Figure 5 is a diagram that illustrates an example of printing conditions for the printing apparatus 21. Under normal printing conditions, the printing conditions for the product packaging enable color printing and printing of standard product package images. Note that under normal printing conditions, information regarding the amount of reduction in emissions based on delivery condition selection and the use of carbon credits is not printed.

Under eco-friendly printing conditions, the printing conditions for the product package enable only monochrome printing for product packaging and printing of simplified product package images. Under eco-friendly printing conditions, information regarding the amount of reduction in emissions based on the selection of a delivery condition and the use of carbon credits is not printed.

Under eco-friendly and consumption reducing printing conditions, the product package is not printed, and only the amount of reduction in emissions achieved by the selected delivery conditions is printed.

Under eco-friendly printing conditions with carbon credit utilization information, the product package is not printed. Instead, the amount of reduced emissions achieved by the utilization of carbon credits and information such as the location of the carbon credit certificate are printed.

The four printing conditions illustrated in Figure 5 may be specified by the shipper on the shipper terminal device 20, for example, but may also be changed according to the delivery condition selected in the greenhouse gas managing apparatus 10. For example, under normal delivery conditions, standard printing conditions may be used; under eco-friendly delivery conditions, eco-friendly printing conditions or eco-friendly printing conditions with consumption reducing printing may be used; and under eco-friendly delivery conditions that utilize carbon credits, eco-friendly printing conditions with carbon credit utilization information printing may be used.

Next, the packaging material manufacturer terminal device 40 will be described.

The packaging material manufacturer terminal 40 is a terminal device utilized by manufacturers of packaging materials for packages. The packaging material manufacturer terminal 40 receives purchase requests for packaging materials from shippers. Packaging material manufacturers deliver packaging materials to shippers in response to the purchase requests.

Information regarding packaging materials sold by packaging material manufacturers is registered in advance in the greenhouse gas managing apparatus 10. The management unit 15 of the greenhouse gas managing apparatus 10 has a preset table in which the type of packaging material is correlated with the corresponding greenhouse gas emissions that will be generated during the production thereof. The management unit 15 acquires the packaging material information for the package output from the shipper terminal device 20, references the above table to determine the amount of greenhouse gas emissions, and adds the amount.

The carrier terminal device 30 is a terminal device used by carriers that receive delivery requests from the shipper and delivers the package. The carrier terminal device 30 may be, for example, a desktop computer or a notebook computer. However, the present invention is not limited to such a configuration. Mobile terminals such as tablet devices and smartphones may be utilized as the shipper terminal device 20.

Note that although not considered in the eco-friendly delivery system 1 of the above embodiment, when packaging materials are delivered from the packaging material manufacturer to the shipper, the management unit 15 may also manage and add the greenhouse gas emissions generated by this delivery. The method for selecting delivery conditions and managing greenhouse gas emissions in this case may employ the same methods described above for selecting package delivery conditions and managing greenhouse gas emissions.

According to the eco-friendly delivery system 1 of the above embodiment, the system acquires package information for a package to be delivered. The system selects delivery conditions for the package such that the amount of greenhouse gas emissions associated with delivery of the package are less than or equal to a preset target amount of emissions. The system manages greenhouse gas emissions corresponding to the selected delivery conditions. Therefore, the amounts of greenhouse gas emissions can be managed in order to achieve a target amount of emissions and enable delivery under conditions that bring emissions closer to the target.

In addition, in the eco-friendly delivery system 1 of the above embodiment, in the case that the amount of greenhouse gas emissions calculated based on the package information exceeds a threshold value based on the target amount of emissions, carbon offsets using carbon credits are employed to reduce the amount of greenhouse gas emissions. This facilitates achieving the target amount of emissions of greenhouse gases.

Further, in the eco-friendly delivery system 1 of the above embodiment, the amount of greenhouse gas reduced by the selection of delivery conditions and information regarding the utilization of carbon credits are output to the printing apparatus 21. This information is printed on the packaging material by the printing apparatus 21, enabling the shipper to promote their involvement in the CSR (Corporate Social Responsibility) movement.

Note that the present invention is not limited to the embodiment described above, and may be embodied by modifying components within a scope that does not deviate from the essence thereof during implementation. In addition, various inventions may be formed by combining the plurality of components disclosed in the above embodiments as appropriate. For example, all of the components of the embodiment may be combined as appropriate. It goes without saying that various modifications and applications are possible within a scope that does not deviate from the spirit of the invention.

The following additional items are disclosed with respect to the present invention.

### (Item 1)

The greenhouse gas managing apparatus of the present invention is equipped with: a package information acquiring unit for acquiring information regarding a package to be delivered; a delivery condition selecting unit for selecting delivery conditions for the package to be delivered based on the package information acquired by the package information acquiring unit, such that the amount of greenhouse gas emissions associated with delivery of the package to be delivered are less than or equal to a predetermined target amount of emissions; and a management unit for managing the amount of greenhouse gas emissions corresponding to the delivery conditions selected by the delivery condition selecting unit.

### (Item 2)

In the greenhouse gas managing apparatus according to Item 1, the delivery condition selecting unit may reduce an amount of greenhouse gas emissions by utilizing carbon offsets via carbon credits in the case that the amount of greenhouse gas emissions calculated based on the package information exceeds a threshold value based on the target amount of emissions.

### (Item 3)

In the greenhouse gas managing apparatus according to Item 1 or 2, the delivery condition selecting unit may output print information that includes an amount of reduction in greenhouse gas emissions achieved by selecting the delivery conditions on a packaging material of the package to be delivered.

### (Item 4)

In the greenhouse gas managing apparatus according to Item 2, the delivery condition selecting unit may output print information that includes information regarding utilization of carbon credits on a packaging material of the package.

### (Item 5)

A greenhouse gas management method of the present invention acquires information regarding a package to be delivered, selects delivery conditions for the package based on the acquired package information such that greenhouse gas emissions associated with delivery of the package is less than or equal to a predetermined target amount of emissions, and manages an amount of greenhouse gas emissions corresponding to the selected delivery conditions.

### (Item 6)

A greenhouse gas management program of the present invention causes a computer to execute the steps of: acquiring information regarding a package to be delivered, selecting delivery conditions for the package based on the acquired package information such that greenhouse gas emissions associated with delivery of the package is less than or equal to a predetermined target amount of emissions, and managing an amount of greenhouse gas emissions corresponding to the selected delivery conditions.

### [Explanation of the Reference Numerals]

- 1: eco-friendly delivery system
- 10: greenhouse gas managing apparatus
- 11: control unit
- 12: storage unit
- 13: package information acquiring unit
- 14: delivery condition selecting unit
- 15: management unit
- 20: shipper terminal device
- 21: printing apparatus
- 30: carrier terminal device
- 40: packaging material manufacturer terminal device
- T1-T4: emissions calculation tables

## Claims

1. A greenhouse gas managing apparatus comprising:
a package information acquiring unit (13) for acquiring information regarding a package to be delivered;
a delivery condition selecting unit (14) for selecting delivery conditions for the package to be delivered based on the package information acquired by the package information acquiring unit (13), such that the amount of greenhouse gas emissions associated with delivery of the package to be delivered are less than or equal to a predetermined target amount of emissions; and
a management unit (15) for managing the amount of greenhouse gas emissions corresponding to the delivery conditions selected by the delivery condition selecting unit (14).

2. The greenhouse gas managing apparatus according to Claim 1, wherein:
the delivery condition selecting unit (14) reduces greenhouse gas emissions by utilizing carbon offsets via carbon credits in the case that the amount of greenhouse gas emissions calculated based on the package information exceeds a threshold value based on the target amount of emissions.

3. The greenhouse gas managing apparatus according to Claim 1 or Claim 2, wherein:
the delivery condition selecting unit (14) outputs print information that includes an amount of reduction in greenhouse gas emissions achieved by selecting the delivery conditions on a packaging material of the package to be delivered.

4. The greenhouse gas managing apparatus according to Claim 2, wherein:
the delivery condition selecting unit (14) outputs print information that includes information regarding utilization of carbon credits on a packaging material of the package.

5. A greenhouse gas management method comprising
acquiring information regarding a package to be delivered;
selecting delivery conditions for the package based on the acquired package information such that greenhouse gas emissions associated with delivery of the package is less than or equal to a predetermined target amount of emissions; and
managing an amount of greenhouse gas emissions corresponding to the selected delivery conditions.

6. A greenhouse gas management program that causes a computer to execute the steps of:
acquiring information regarding a package to be delivered;
selecting delivery conditions for the package based on the acquired package information such that greenhouse gas emissions associated with delivery of the package is less than or equal to a predetermined target amount of emissions; and
managing an amount of greenhouse gas emissions corresponding to the selected delivery conditions.
